# FASCICULE DE BREVET EUROPEEN

(11) **EP 3 114 037 B1**
(45) Date de publication et mention de la délivrance du brevet: **22.04.2020**
(21) Numéro de dépôt: 15708214.0
(22) Date de dépôt: 06.03.2015
(51) Int. Cl.: B65B 51/22, B29C 65/08, B29C 65/58, B29C 65/00, B65B 9/04, F42B 12/40, F42B 33/00, B29C 65/74, B29C 65/78, B65B 25/00, F42B 8/14

(54) **PROCÉDÉ DE FABRICATION DE CAPSULE**
VERFAHREN ZUR HERSTELLUNG VON KAPSELN
METHOD FOR THE MANUFACTURE OF CAPSULES

(30) Priorité: 07.03.2014 FR 1451849
(43) Date de publication de la demande: 11.01.2017
(73) Titulaire: Melchior Material and Life Science, 64170 LACQ (FR)
(72) Inventeur: DELHAYE, David, F-57950 Montigny les Metz (FR)
(74) Mandataire: Regimbeau
(86) Numéro de dépôt international: PCT/EP2015/054742
(87) Numéro de publication internationale: WO 2015/132390

(56) Documents cités:
- EP-A1- 0 344 137
- EP-A2- 0 264 212
- WO-A1-95/23064
- WO-A1-2009/084045
- WO-A1-2014/016510
- DE-A1- 1 704 120
- DE-A1- 10 306 092
- JP-A- S51 100 833
- US-A- 3 617 589

## Description

### Domaine technique

La présente invention se rapporte à un procédé de fabrication de capsule par l'assemblage de deux éléments issus du formage de film thermoplastique. Elle concerne en particulier la fabrication de capsule emplie au moins partiellement par une matière sous forme solide, fractionnée, liquide, gazeuse ou pâteuse. Elle s'applique en particulier mais non exclusivement aux billes de peinture marquante utilisées dans les entrainements ou les jeux militaires.

### Etat de la technique

De nombreux domaines techniques utilisent des capsules contenant une matière de différentes phases. Le domaine des médicaments utilisent des capsules pour contenir de la matière active sous forme de poudre, par exemple. La capsule est ingérée et l'enveloppe est dissoute pour libérer la matière active. Dans le domaine agricole, le demandeur a déjà proposé dans le document FR 2 943 219 A1 l'encapsulation d'engrais ou de produits phytosanitaires, afin de contrôler leur libération.

Un autre domaine d'utilisation de capsule est celui des billes de peinture marquante. Par bille de peinture marquante, on entend, au sens de la présente invention, une capsule généralement de forme sphérique, qui comprend une enveloppe et une composition de peinture marquante contenue dans cette enveloppe.

Dans ce contexte, la nature du matériau constitutif de l'enveloppe et ses caractéristiques dimensionnelles (notamment l'épaisseur) doivent être telles que l'impact provoqué d'une bille sur une cible provoque l'éclatement de l'enveloppe et l'étalement de la composition de peinture marquante sur la cible, ce qui indique que celle-ci a été atteinte.

A l'heure actuelle, une telle bille est réalisée avec une enveloppe en gélatine selon un procédé connu classiquement utilisé pour la fabrication de médicaments. Ce procédé comprend la formation par thermoformage de deux hémisphères, qui sont assemblés l'un avec l'autre par soudage, tandis que la composition marquante est introduite dans la cavité délimitée par les deux hémisphères.

Cette bille pose toutefois de nombreux problèmes liés à la nature de l'enveloppe.

En effet, étant donné que la gélatine est d'origine animale, sa préparation est délicate et il est difficile d'obtenir une composition constante et reproductible. En outre, la fabrication de billes en gélatine doit être effectuée dans des conditions atmosphériques contrôlées en raison de la grande sensibilité de la gélatine à l'humidité et à la température. Celle-ci se manifeste généralement comme suit : à partir d'un certain taux d'humidité, la gélatine se ramollit, tandis qu'à température élevée, elle a tendance à sécher. Par ailleurs, en cas de gel, l'eau contenue dans la gélatine se cristallise, ce qui a pour conséquence que la gélatine perd une partie de ses propriétés mécaniques. En conséquence également, les conditions de transport et de stockage sont strictes et nécessitent souvent des lieux à température maîtrisée avant et après la commercialisation des billes.

Enfin, la sensibilité de la gélatine à l'humidité impose d'utiliser des compositions de peinture non aqueuses à base de solvants tels que l'éthylène-glycol, le polyéthylène-glycol ou le polypropylène-glycol. Ces compositions de peintures non aqueuses se présentent généralement sous forme de gels visqueux et contiennent des solvants qui ne sont absolument pas respectueux de l'environnement.

Le demandeur a proposé dans le document WO2009/074732 WO2009/074720 A1 une bille dont l'enveloppe est réalisée dans un matériau thermoplastique oxo-biodégradable. Ainsi la coquille peut rester dans la nature sans conséquence pour l'environnement, puisqu'elle peut disparaître naturellement sans laisser de trace. Cependant, le procédé de fabrication nécessite d'utiliser une composition de peinture autorisant une température élevée pour que le thermoformage puisse être réalisé dans la même opération que le remplissage.

Aussi le document WO2014/016510 A1 divulgue un procédé et machine de formation de capsules contenant un fluide selon lequel on procède pas par pas aux étapes suivantes : réception de deux pans de film thermoplastique, chaque pan comportant au moins une colonne de cavités formées ; rapprochement des deux pans pour mettre en correspondance les cavités respectives de chaque pan et placage des pans par des paires de barres qui pincent successivement les pans de part et d'autre des paires de colonnes de cavités ; remplissage de la poche délimitée entre deux paires de barres par le fluide pour remplir les cavités ; soudure des pans autour des cavités pour former les capsules.

Document DE 17 04 120 A1 divulgue un procédé alternatif de formation d'objets plastiques sphériques à l'intérieur vide.

L'invention vise donc à fournir un procédé de fabrication de capsules ou de billes permettant d'utiliser un matériau non sensible à l'humidité pour l'enveloppe indépendamment du matériau pour le fluide de remplissage.

### Description de l'invention

Avec ces objectifs en vue, l'invention a pour objet un procédé de fabrication de capsule, caractérisé en ce qu'il comporte les étapes suivantes :
a) une étape de préparation comportant la préparation d'un premier et d'un deuxième élément de capsule formés à partir de film en matière thermoplastique, le premier élément au moins comportant une cavité, chaque élément étant muni d'une couronne périphérique,
b) une étape de rapprochement dans laquelle le premier et le deuxième élément sont rapprochés de manière à superposer les couronnes,
c) une étape de placement pour placer l'ensemble des deux éléments entre une sonotrode et une enclume, l'enclume comportant un évidement d'enclume et une surface de frappe entourant l'évidement d'enclume, la sonotrode comportant un évidement de sonotrode de même section que l'évidement d'enclume et une surface de travail entourant l'évidement de sonotrode, les surfaces de frappe et de travail étant prévues pour venir en contact l'une sur l'autre sur une zone de travail s'étendant le long des évidements, la zone de travail ayant une largeur comprise entre 0,05 et 1 mm ;
d) une étape de serrage dans laquelle on serre les couronnes entre la surface de travail et la surface de frappe par le rapprochement de la sonotrode et de l'enclume,
e) une étape de soudure dans laquelle on actionne la sonotrode par des ultrasons dirigés vers l'enclume en maintenant le serrage jusqu'à l'obtention de la soudure des éléments et la découpe en détachant les couronnes d'une capsule.

L'utilisation de moyens de soudure par ultrasons permet de s'affranchir des contraintes de température lors de la fermeture de la capsule. De plus, on a réussi à réaliser ensemble l'étape de soudure et l'étape de découpage, ce qui permet une grande productivité. Du fait de la présence des surfaces de travail et de frappe, en regard l'une de l'autre sur une largeur contrôlée et qui pincent les couronnes superposées, on constate qu'on forme une zone fondue par l'application des ultrasons suffisamment conséquente pour assembler les deux éléments de la capsule. La zone fondue est refoulée lors du serrage et du rapprochement de la sonotrode sur l'enclume de telle sorte qu'une partie de cette matière forme un bourrelet repoussé vers les évidements. Ce bourrelet assure la liaison entre les deux éléments après refroidissement et solidification. Dans ce procédé, seule la zone pincée entre les surfaces de travail et de frappe est échauffée.

Selon une application particulière, le deuxième élément a également une cavité, les cavités étant en forme de demi-sphères de manière à former une capsule en forme de bille. Dans ce cas, les évidements ont une section circulaire. On constate que la bille formée ne comporte qu'une trace limitée de la soudure, avec un relief inférieur à 0,1 mm.

Selon un perfectionnement, entre les étapes a) et b) de préparation et de rapprochement, on emplit la cavité avec un liquide ou un solide sous forme fractionnée dans une étape de remplissage. Le formage des cavités est réalisé en amont du remplissage, et le refroidissement a pu être réalisé avant la mise en place d'une matière de remplissage. Celle-ci n'est donc pas affectée par les risques de température élevée. Après l'étape de soudure, la matière est enfermée et à l'abri des conditions atmosphériques.

Selon un autre perfectionnement, entre les étapes a) et b) de préparation et de rapprochement, on emplit la cavité avec un gel dans une étape de remplissage. Le gel permet d'obtenir un remplissage complet de la capsule. De plus, lorsque les deux éléments comportent des cavités, il est possible de remplir les deux cavités et de retourner l'une d'elles au moins afin de réaliser leur rapprochement sans que la matière ne s'échappe par gravité. En effet, le gel adhère naturellement à la paroi interne des cavités et reste d'un seul tenant.

Selon une application particulière, le volume de gel déposé dans la cavité est supérieur à celui de ladite cavité. Le gel ainsi déposé est apte à emplir complètement la cavité, sans laisser d'air.

De préférence, lors de l'étape b) de rapprochement, les couronnes sont serrées l'une contre l'autre de manière à chasser à l'extérieur des couronnes un excédent de gel. On s'assure que le volume de la capsule sera entièrement empli de gel, sans volume d'air résiduel.

Dans une application particulière, le gel est une peinture et la capsule est une bille de paintball. La bille ainsi réalisée avec une enveloppe en matière thermoplastique peut être réalisée avec une peinture à base d'eau, contrairement aux capsules en gélatine selon l'art antérieur. En effet, la matière thermoplastique, telle que du polyéthylène ou du polypropylène n'est pas sensible à l'eau. Une telle peinture est moins nocive pour l'environnement. De plus, les conditions de stockage sont facilitées du fait qu'il n'est pas nécessaire de préserver les billes de l'humidité et du fait que l'enveloppe n'est pas sensible aux températures extrêmes d'environnement.

Selon d'autres caractéristiques avantageuses du procédé,
- la largeur de la zone de travail est comprise entre 0,1 et 0,4 mm. La plus faible largeur est adaptée aux fortes épaisseurs de films pour faciliter leur découpe, tandis que les plus fortes largeurs sont adaptées aux faibles épaisseurs de films afin de faire fondre une quantité suffisante de matière pour former le bourrelet reliant les deux éléments ;
- la puissance des ultrasons pendant l'étape e) de soudure est croissante. Un niveau de puissance modéré initialement permet de chasser éventuellement la matière excédentaire qui se trouverait entre les couronnes, et de commencer l'échauffement pour obtenir le ramollissement de la matière thermoplastique. Une augmentation de la puissance en fin d'opération permet de garantir la fusion en un seul bourrelet de la matière issue des couronnes et de le repousser jusqu'à obtenir la découpe ;
- la fréquence des ultrasons est comprise entre 25 et 40 kHz, de préférence entre 30 et 35 kHz. Les meilleures résultats ont été obtenus avec ces valeurs ;
- on munit les couronnes de moyens de retenue à l'étape a) de préparation, l'étape b) de rapprochement étant complétée par l'assemblage des moyens de retenue de manière à assembler le premier et le deuxième élément. Les moyens de retenue permettent de faciliter le transport de l'ensemble formé par les éléments. Ces moyens peuvent être une soudure temporaire ou des formes qui s'emboîtent ou s'encliquettent ;
- le premier élément est issu d'une première bande et le deuxième élément est issu d'une deuxième bande. Les éléments sont ainsi reliés entre eux, ce qui permet de les transférer facilement d'un poste à l'autre ;
- le premier élément et le deuxième élément sont en matière thermoplastique biodégradable. L'utilisation d'une matière biodégradable est avantageuse pour les applications dans lesquelles les capsules seront utilisées et resteront à l'extérieur. Ainsi, les enveloppes se dégraderont pour disparaître. La matière contenue dans la capsule sera libérée ou dégradée également.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue schématique en coupe d'un premier et d'un deuxième film de matière thermoplastique avant formage ;
- la figure 2 est une vue similaire à la figure 1 de deux éléments après une étape de formage ;
- la figure 3 montre une étape de remplissage ;
- la figure 4 montre une étape de rapprochement dans laquelle les deux éléments sont assemblés ;
- la figure 5 montre une étape de soudure des deux éléments entre eux ;
- la figure 6 est une vue du détail VI de la figure 5.

### DESCRIPTION DETAILLEE

Un mode de réalisation du procédé selon l'invention va être décrit en lien avec la fabrication de billes à peinture marquante, bien que le procédé puisse s'appliquer à la fabrication de capsules ayant d'autres applications.

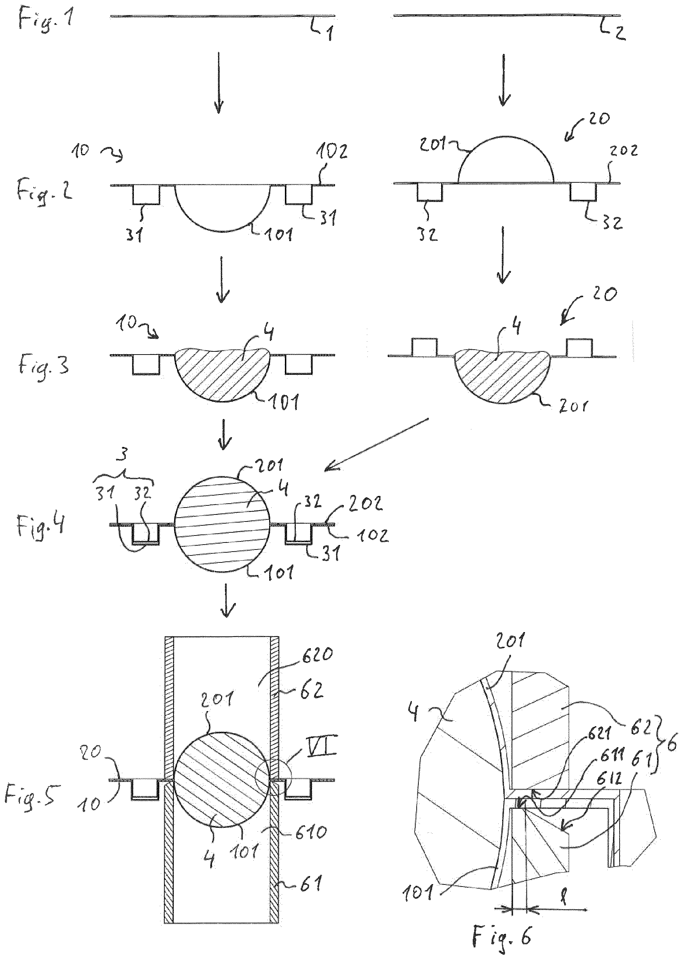

La figure 1 montre un premier et un deuxième film 1, 2 de matière thermoplastique oxo-biodégradable, telle que du polyéthylène ou du polypropylène, d'une épaisseur comprise entre 0,1 et 0,5 mm, de préférence entre 0,2 et 0,3 mm.

En se référant à la figure 2, un premier élément 10 est formé à partir du premier film1 tandis qu'un deuxième élément 20 est formé à partir du deuxième film 2. Pour cela, chaque film 1, 2 est chauffé de manière à le ramollir, puis subit une opération de thermoformage, d'une manière connue en soi, par l'application de poinçons contre des matrices, non représentés, combinée éventuellement à une aspiration ou à un soufflage par de l'air contre les matrices. Lors de cette opération, le premier élément 10 est formé avec une première cavité 101 hémisphérique et une première couronne 102 entourant la première cavité 101, ainsi que deux premières cuvettes 31 issues de la première couronne 102 du même côté que la première cavité 101 par rapport à la première couronne 102. Le deuxième élément 20 est formé avec une deuxième cavité 201 hémisphérique et une deuxième couronne 202 entourant la deuxième cavité 201, ainsi que deux deuxièmes cuvettes 32 issues de la deuxième couronne 202 du côté opposé à la deuxième cavité 201 par rapport à la deuxième couronne 202. Plusieurs éléments peuvent être réalisés en parallèle à partir d'un même film, celui-ci étant refendu avant ou après l'opération de thermoformage pour former une bande d'éléments 10, 20 les uns à la suite des autres. Lorsque plusieurs bandes sont obtenues à partir de films larges, il est possible de séparer chacune des bandes vers des postes spécifiques, chaque poste mettant en œuvre le remplissage et la soudure de manière indépendante l'un de l'autre. Le dysfonctionnement de l'un des postes n'oblige par à arrêter les autres postes.

Le premier et le deuxième élément 10, 20 se refroidissent après formage et durcissent. Ils sont amenés à un poste de remplissage auquel les cavités 101, 201 reçoivent une peinture marquante sous forme de gel 4 comme montré sur la figure 3. Le volume est légèrement excédentaire par rapport au volume des cavités 101, 201.

Le deuxième élément 20 est retourné et plaqué contre le premier élément 10 par des moyens de rapprochement, non représentés, lors d'une étape de rapprochement, pour arriver à la position représentée sur la figure 4. Lors de cette étape de rapprochement, les cuvettes 31, 32 sont emboîtées par paire d'une première cuvette 31 et d'une deuxième cuvette 32, de manière à former des moyens de retenue 3.

L'étape suivante est représentée sur les figures 5 et 6. L'ensemble 5 des deux éléments 10, 20 assemblés est placé dans des moyens de soudure 6, entre une enclume 61 et une sonotrode 62. L'enclume 61 comporte un évidement d'enclume 610 de forme cylindrique de section circulaire et une surface de frappe 611 entourant l'évidement d'enclume 610. La surface de frappe 611 est prolongée vers l'extérieur par une surface de dégagement 612, de forme tronconique. La sonotrode 62 comporte un évidement de sonotrode 620 de même section que l'évidement d'enclume 610 et une surface de travail 621 entourant l'évidement de sonotrode 620. Les surfaces de frappe et de travail 611, 621 sont prévues pour venir en contact l'une sur l'autre sur une zone de travail s'étendant le long des évidements 610, 620, la zone ayant une largeur l comprise entre 0,05 et 1 mm. Les moyens de soudure 6 comportent des moyens de serrage, non représentés, pour rapprocher et serrer la sonotrode 62 contre l'enclume 61. Les moyens de soudure 6 comportent également des moyens de génération d'ultrasons, non représentés, pour générer des ultrasons dans la sonotrode 62 dirigés vers l'enclume 61. Les cavités 101, 201 des éléments 10, 20 se logent respectivement dans les évidements 610, 620 d'enclume et de sonotrode, comme montré sur la figure 5. L'enclume et la sonotrode sont montés coulissants l'un en regard de l'autre selon le même axe et actionné par des vérins, par exemple pneumatiques, non représentés.

Lors de l'étape de soudure, après l'introduction de l'ensemble des deux éléments 10, 20 entre la sonotrode 62 et l'enclume 61, ces dernières sont rapprochées par les vérins jusqu'à enserrer les couronnes 102, 202. Une pression de serrage est maintenue pendant une durée suffisante pour amener les couronnes 102, 202 en contact l'une avec l'autre en évacuant l'excédent de gel 4 vers la périphérie des couronnes 102, 202. Puis les moyens de génération des ultrasons sont activés afin de réaliser la soudure. En maintenant une pression, la puissance est fournie d'abord à un premier niveau, afin de finir de chasser le gel 4 résiduel entre les couronnes 102, 202 en regard des surfaces de travail et de frappe, et de commencer à faire fondre la matière des couronnes 102, 202 en périphérie des cavités 101, 201. Quand la matière est à une température suffisante, la puissance des ultrasons est augmentée. Dans la zone de soudure, la matière des deux couronnes 102, 202 se réunit et forme un bourrelet qui est chassé vers les cavités 101, 201. La sonotrode 62 et l'enclume 61 viennent en contact de manière à ne laisser subsister aucune matière entre les couronnes 102, 202 et les cavités 101, 201. La soudure est terminée ainsi, les ultrasons sont stoppés et les cavités 101, 201 forment une capsule en forme de bille à peinture marquante qui est évacuée par l'un des évidements 610, 620. La sonotrode 62 et l'enclume 61 s'écartent et les couronnes 102, 202 restantes sont évacuées. L'opération peut être renouvelée pour fabriquer une autre capsule.

Des essais de fabrication ont été conduits en faisant varier certains paramètres. Ceux qui sont rapportés ici ont été conduits avec un même film de polypropylène d'épaisseur environ 0,45 mm. La largeur de la surface de travail était de 0,2 mm. Les cavités 101, 201 étaient formées par themoformage en forme hémisphérique de diamètre 12,7 mm. La puissance des ultrasons était maintenue constante tout au long de la phase de soudure-découpe à 35 kHz. Une première phase de test a été réalisée sans remplissage. Une deuxième phase a été conduite en remplissant chaque cavité par une peinture à l'eau sous forme de gel.

Les paramètres qui ont variés sont : la pression d'air dans les vérins de diamètre 40 mm, le temps d'application des ultrasons, la puissance des ultrasons (80% correspond ci-après à une amplitude de 39 µm).

**Tableau 1 : pression 4 bar**

| Cas | Puissance ultrasons | Durée de soudage (s) | Soudure | Découpe | Fluage |
|---|---|---|---|---|---|
| 1 | 80% | 0,1 | Oui | Non | |
| **2** | **80%** | **0,2** | **Oui** | **Oui** | **Bon** |
| 3 | 80% | 0,3 | Ouverte | Oui | |

**Tableau 2 : pression 4 bar**

| Cas | Puissance ultrasons | Durée de soudage (s) | Soudure | Découpe | Fluage |
|---|---|---|---|---|---|
| 4 | 90% | 0,1 | Oui | Non | Mauvais |
| 5 | 90% | 0,2 | Ouverte | Oui | |
| 6 | 90% | 0,3 | Ouverte | Oui | |

**Tableau 3 : pression 1,5 bar**

| Cas | Puissance ultrasons | Durée de soudage (s) | Soudure | Découpe | Fluage |
|---|---|---|---|---|---|
| 7 | 80% | 0,1 | Non | Non | |
| 8 | 80% | 0,2 | Non | Non | |
| 9 | 80% | 0,3 | Oui | Non | Mauvais |

**Tableau 4 : pression 6 bar**

| Cas | Puissance ultrasons | Durée de soudage (s) | Soudure | Découpe | Fluage |
|---|---|---|---|---|---|
| 10 | 80% | 0,1 | Non | Non | |
| 11 | 80% | 0,2 | Oui | Non | Mauvais |
| 12 | 80% | 0,3 | Ouverte | | |

On constate que dans les nombreux essais, très peu de combinaisons de paramètres sont concluantes. Les critères qui ont été évalués sont les suivants :
- soudure : les cavités sont-elles assemblées, si oui, l'assemblage est-il ouvert ? On attend que la capsule soit fermée de manière étanche.
- découpe : est-elle réalisée ?
- fluage : un bourrelet est-il formé dans la capsule formée ? La formation de celui-ci témoigne d'une solidité de la soudure.

On en conclut que si la durée d'application des ultrasons est insuffisante, la découpe ne se fait pas (cas 1 / cas 2). La soudure est également affectée par une durée trop courte (cas 9 / cas 8). Une puissance trop élevée rend difficile le contrôle de la durée de soudure (cas 4 / cas 5) entre le fait réaliser la découpe ou d'avoir une soudure étanche. La force d'application de la sonotrode sur l'enclume est également déterminante. Pas assez fort, et la soudure ne se fait pas de manière étanche (tableau 3), trop fort, et l'enclume et la sonotrode vienne rapidement en contact ce qui met la machine en défaut avant la réalisation de la découpe (tableau 4).

Avec les paramètres ainsi déterminés, des billes à peinture marquante à l'eau ont été réalisées. Les essais de tir ont été concluants en ce que les billes n'éclatent pas lors du tir, même avec de fortes puissances de tir (330 pieds/s), mais en touchant la cible. La trajectoire des billes est satisfaisante en permettant d'atteindre une cible à 20 m à coup sûr.

L'invention n'est pas limitée au mode de réalisation qui vient d'être décrit à titre d'exemple. La section des évidements 610, 620 peut être quelconque, de même que la forme des cavités 101, 201. Les cavités 101, 201 peuvent n'être remplies que partiellement, par une matière solide fractionnée ou par un liquide.

## Revendications

1. Procédé de fabrication de capsule, **caractérisé en ce qu'**il comporte les étapes suivantes :
a) une étape de préparation comportant la préparation d'un premier et d'un deuxième élément (10, 20) de capsule formés à partir de film en matière thermoplastique, le premier élément (10) au moins comportant une première cavité (101), chaque élément (10, 20) étant muni d'une couronne (102, 202) périphérique,
b) une étape de rapprochement dans laquelle le premier et le deuxième élément (10, 20) sont rapprochés de manière à superposer les couronnes (102, 202),
c) une étape de placement pour placer l'ensemble des deux éléments (10, 20) entre une sonotrode (62) et une enclume (61), l'enclume (61) comportant un évidement d'enclume (610) et une surface de frappe (611) entourant l'évidement d'enclume (610), la sonotrode (62) comportant un évidement de sonotrode (620) de même section que l'évidement d'enclume (610) et une surface de travail (621) entourant l'évidement de sonotrode (620), les surfaces de frappe et de travail (611, 621) étant prévues pour venir en contact l'une sur l'autre sur une zone de travail s'étendant le long des évidements (610, 620), la zone ayant une largeur (l) comprise entre 0,05 et 1 mm ;
d) une étape de serrage dans laquelle on serre les couronnes (102, 202) entre la surface de travail (621) et la surface de frappe (611) par le rapprochement de la sonotrode (62) et de l'enclume (61),
e) une étape de soudure dans laquelle on actionne la sonotrode (62) par des ultrasons dirigés vers l'enclume (61) en maintenant le serrage jusqu'à l'obtention de la soudure des éléments (10, 20) et la découpe en détachant les couronnes (102, 202) d'une capsule.

2. Procédé de fabrication selon la revendication 1, selon lequel le deuxième élément (20) a également une cavité, les cavités (101, 201) étant en forme de demi-sphères de manière à former une capsule en forme de bille.

3. Procédé selon l'une des revendications 1 ou 2, selon lequel, entre les étapes a) et b) de préparation et de rapprochement, on emplit la cavité (101, 201) avec un liquide ou un solide sous forme fractionnée dans une étape de remplissage.

4. Procédé selon l'une des revendications 1 ou 2, selon lequel, entre les étapes a) et b) de préparation et de rapprochement, on emplit la cavité (101, 201) avec un gel (4) dans une étape de remplissage.

5. Procédé selon la revendication 4, selon lequel le volume de gel (4) déposé dans la cavité (101, 201) est supérieur à celui de ladite cavité.

6. Procédé selon la revendication 5, selon lequel lors de l'étape b), les couronnes (102, 202) sont serrées l'une contre l'autre de manière à chasser à l'extérieur des couronnes (102, 202) un excédent de gel (4).

7. Procédé selon l'une des revendications 4 à 6, selon lequel le gel (4) est une peinture et la capsule est une bille de paintball.

8. Procédé selon l'une des revendications précédentes, selon lequel la largeur de la zone de travail est comprise entre 0,1 et 0,4 mm.

9. Procédé selon l'une des revendications précédentes, selon lequel la puissance des ultrasons pendant l'étape e) de soudure est croissante.

10. Procédé selon l'une des revendications précédentes, selon lequel la fréquence des ultrasons est comprise entre 25 et 40 kHz, de préférence entre 30 et 35 kHz.

11. Procédé selon l'une des revendications précédentes, selon lequel on munit les couronnes (102, 202) de moyens de retenue (3) à l'étape a) de préparation, l'étape b) de rapprochement étant complétée par l'assemblage des moyens de retenue (3) de manière à assembler le premier et le deuxième élément (10, 20).

12. Procédé selon l'une des revendications précédentes, selon lequel le premier élément (10) est issu d'une première bande et le deuxième élément (20) est issu d'une deuxième bande.

13. Procédé selon l'une des revendications précédentes, selon lequel le premier élément (10) et le deuxième élément (20) sont en matière thermoplastique biodégradable.

## Patentansprüche

1. Verfahren zur Herstellung von Kapseln, **dadurch gekennzeichnet, dass** es die folgenden Schritte aufweist:
a) einen Vorbereitungsschritt, aufweisend die Vorbereitung eines ersten und eines zweiten Kapselelements (10, 20), gebildet aus Folie aus thermoplastischem Material, wobei mindestens das erste Element (10) einen ersten Hohlraum (101) aufweist, wobei jedes Element (10, 20) mit einem peripheren Kranz (102, 202) ausgestattet ist,
b) einen Annäherungsschritt, bei dem das erste und das zweite Element (10, 20) derart angenähert werden, dass die Kränze (102, 202) übereinanderliegen,
c) einen Platzierungsschritt, um die Gesamtheit der zwei Elemente (10, 20) zwischen einer Sonotrode (62) und einem Amboss (61) zu platzieren, wobei der Amboss (61) eine Ambossaussparung (610) und eine Schlagfläche (611) aufweist, die die Ambossaussparung (610) umgibt, wobei die Sonotrode (62) eine Sonotrodenaussparung (620) mit demselben Querschnitt wie die Ambossaussparung (610) und eine Arbeitsfläche (621) umfasst, die die Sonotrodenaussparung (620) umgibt, wobei die Schlag- und Arbeitsflächen (611, 621) vorgesehen sind, auf einer Arbeitszone übereinander in Kontakt zu kommen, die sich entlang der Aussparungen (610, 620) erstreckt, wobei die Zone eine Breite (I) zwischen 0,05 und 1 mm hat;
d) einen Spannschritt, bei dem die Kränze (102, 202) zwischen der Arbeitsfläche (621) und der Schlagfläche (611) durch die Annäherung der Sonotrode (62) und des Ambosses (61) gespannt werden,
e) einen Schweißschritt, bei dem die Sonotrode (62) durch zum Amboss (61) gerichteten Ultraschall betätigt wird, bei Aufrechterhaltung des Spannens, bis zum Erhalt des Schweißens der Elemente (10, 20) und des Schneidens durch Abtrennen der Kränze (102, 202) von einer Kapsel.

2. Herstellungsverfahren nach Anspruch 1, wobei das zweite Element (20) ebenfalls einen Hohlraum hat, wobei die Hohlräume (101, 201) in Form von Halbkugeln sind, so dass eine Kapsel in Kugelform gebildet wird.

3. Verfahren nach einem der Ansprüche 1 oder 2, wobei zwischen den Schritten a) und b) der Vorbereitung und der Annäherung der Hohlraum (101, 201) bei einem Füllschritt mit einer Flüssigkeit oder einem Feststoff in zerteilter Form befüllt wird.

4. Verfahren nach einem der Ansprüche 1 oder 2, wobei zwischen den Schritten a) und b) der Vorbereitung und der Annäherung der Hohlraum (101, 201) bei einem Füllschritt mit einem Gel (4) befüllt wird.

5. Verfahren nach Anspruch 4, wobei das im Hohlraum (101, 201) angeordnete Volumen des Gels (4) größer als das des Hohlraums ist.

6. Verfahren nach Anspruch 5, wobei beim Schritt b) die Kränze (102, 202) derart gegeneinander gespannt sind, dass ein Überschuss von Gel (4) nach außerhalb des Kranzes (102, 202) geschleudert wird.

7. Verfahren nach einem der Ansprüche 4 bis 6, wobei das Gel (4) eine Farbe ist und die Kapsel eine Paintballkugel ist.

8. Verfahren nach einem der vorangehenden Ansprüche, wobei die Breite der Arbeitszone zwischen 0,1 und 0,4 mm ist.

9. Verfahren nach einem der vorangehenden Ansprüche, wobei die Leistung des Ultraschalls während des Schweißschritts e) zunimmt.

10. Verfahren nach einem der vorangehenden Ansprüche, wobei die Frequenz des Ultraschalls zwischen 25 und 40 kHz, vorzugsweise zwischen 30 und 35 kHz, liegt.

11. Verfahren nach einem der vorangehenden Ansprüche, wobei die Kränze (102, 202) mit Haltemitteln (3) im Vorbereitungsschritt a) ausgestattet werden, wobei der Annäherungsschritt b) durch die Verbindung der Haltemittel (3) derart vervollständigt wird, dass das erste und das zweite Element (10, 20) verbunden werden.

12. Verfahren nach einem der vorangehenden Ansprüche, wobei das erste Element (10) aus einem ersten Band hervorgegangen ist und das zweite Element (20) aus einem zweiten Band hervorgegangen ist.

13. Verfahren nach einem der vorangehenden Ansprüche, wobei das erste Element (10) und das zweite Element (20) aus biologisch abbaubarem thermoplastischem Material sind.

## Claims

1. A method for the manufacture of capsules, **characterised by** the following stages:
a) a preparation stage including the preparation of a first and a second capsule element (10, 20) formed from film made of thermoplastic material, at least the first element (10) containing a first cavity (101), each element (10, 20) being provided with a peripheral ring (102, 202),
b) a bringing-together stage during which the first and the second elements (10, 20) are brought together, so that the rings (102, 202) are superimposed,
c) a placement stage, for the placement of the set of the two elements (10, 20) between a sonotrode (62) and an anvil (61), the anvil (61) containing an anvil recess (610) and a striking surface (611), surrounding the anvil recess (610), the sonotrode (62) including a sonotrode recess (620), with the same cross-section as the anvil recess (610), and a working surface (621) surrounding the sonotrode recess (620), the striking and working surfaces (611, 621) being designed to come into contact with each other on a working area, extending around the recesses (610, 620), the area having a width (I) of between 0.05 and 1 mm;
d) a clamping stage, during which the rings (102, 202) are clamped between the working surface (621) and the striking surface (611) by the bringing-together of the sonotrode (62) and the anvil (61),
e) a welding stage, during which the sonotrode (62) is actuated by ultrasounds directed towards the anvil (61), while maintaining the clamping action, until the elements (10, 20) are welded together, and cut-out has been achieved, whereby the rings (102, 202) are detached from a capsule.

2. The method for manufacture according to claim 1, wherein the second element (20) also has a cavity, the cavities (101, 201) having the shape of half-spheres, so that they form a capsule in the shape of ball.

3. The method according to one of claims 1 or 2, wherein between stages a) and b) of preparation and bringing-together, the cavity (101, 201) is filled with a liquid or a solid in fractured form, during a filling stage.

4. The method according to one of claims 1 or 2, wherein between stages a) and b) of preparation and bringing-together, the cavity (101, 201) is filled with a gel (4), during a filling stage.

5. The method according to claim 4, wherein the volume of gel (4) deposited in the cavity (101, 201) is greater than the volume of said cavity.

6. The method according to claim 5, wherein during stage b), the rings (102, 202) are clamped against each other so that the excess gel (4) is expelled beyond the rings (102, 202).

7. The method according to claims 4 to 6, wherein the gel (4) is a paint and the capsule is a paintball.

8. The method according to one of the previous claims, wherein the width of the working area is between 0.1 and 0.4 mm.

9. The method according to one of the previous claims, wherein the power of the ultrasounds during the welding stage e) increases.

10. The method according to one of the previous claims, wherein the frequency of ultrasounds is between 25 and 40 kHz, and preferably between 30 and 35 kHz.

11. The method according to one of the previous claims, wherein the rings (102, 202) are provided with retention means (3) during the preparation stage a), the bringing-together stage b) being completed by the joining of the retention means (3) so that the first and the second elements (10, 20) are assembled.

12. The method according to one of the previous claims, wherein the first element (10) is taken from a first strip and the second element (20) is taken from a second strip.

13. The method according to one of the previous claims, wherein the first element (10) and the second element (20) are made from biodegradable thermoplastic material.
